# EUROPEAN PATENT APPLICATION

(11) **EP 3 511 626 A1**
(43) Date of publication of application: **17.07.2019**
(21) Application number: 19151474.4
(22) Date of filing: 11.01.2019
(51) Int. Cl.: F23R 3/28, B21J 15/08, B23P 6/00, F01D 5/00

(54) **METHOD FOR RESIZING HOLES**

(30) Priority: 16.01.2018 US 201815872424
(71) Applicant: General Electric Company, Schenectady, NY 12345 (US)
(72) Inventor: CONRAD, Christopher Carl, Greenville, SC South Carolina 29615-4614 (US); SHUBERT, Gary Charles, Greenville, SC South Carolina 29615-4614 (US); ADEL, Loaie Attia, Greenville, SC South Carolina 29615-4614 (US); BAILEY, Donald Mark, Greenville, SC South Carolina 29615-4614 (US)
(74) Representative: Freigutpartners IP Law Firm

(57) **Abstract**

The present application thus provides a method of filling an existing hole (76) in a surface (125) of a turbine component (110). The method may include the steps of enlarging the existing hole (76), placing a rivet into the enlarged hole (185), welding the rivet (150) into place, and grinding the rivet (150) to be flush with the surface (125) of the turbine component (110).

## Description

### TECHNICAL FIELD

The present application and the resultant patent relate generally to gas turbine engines and more particularly relate to systems and methods for resizing existing holes such as premix fuel inlet holes within a vane turbine fuel nozzle assembly in a fast, efficient, and safe manner.

### BACKGROUND OF THE INVENTION

In gas turbine engines, a combustor includes a number of fuel nozzles. The fuel nozzles typically include a subassembly of generally concentric tubes defining a central passage for supplying diffusion fuel gas and a pair of concentric passages for supplying premix fuel gas. Spaced from and surrounding the subassembly may be an inlet flow conditioner for directing and confining a flow of inlet air past a number of circumferentially spaced vanes carried by the subassembly. The vanes may be in communication with the concentric fuel gas supply passages. Particularly, the vanes may include outer and inner premix fuel supply holes for supplying gas from the respective passages for mixing with the flow of inlet air. The air-fuel gas mixture may be swirled by the vanes downstream of the premix fuel supply holes for subsequent combustion in a combustion chamber.

The fuel supply holes may be sized to achieve a predetermined pressure drop for a specific fuel energy content and may have a specific radial/axial pattern that achieves a radial fuel-to-air ratio that is favorable for overall combustor performance. If the energy content of the fuel increases, the hole sizes may need to be decreased. If it is desired to change the hole pattern on a nozzle, the hole positions also may change. To decrease the fuel hole size or change the overall hole pattern, the holes may be machined open and a cylinder of metal may be brazed into place before the new holes are installed. For repeatability, the cylinder outside diameter should be large enough to leave a sufficient segment of the cylinder perimeter after the new hole is installed when taking into account the original and final hole positions in addition to the cylinder outside diameter tolerances. The replacement piece, however, may be expensive and the overall process may produce excessive amounts of scrap as well as unneeded or outdated inventory.

### SUMMARY OF THE INVENTION

The present application and the resultant patent thus provide a method of filling an existing hole in a surface of a turbine component. The method may include the steps of enlarging the existing hole, placing a rivet into the enlarged hole, welding the rivet into place, and grinding the rivet to be flush with the surface of the turbine component.

The present application and the resultant patent further provide a method of replacing an existing fuel supply hole in a vane of a fuel nozzle assembly. The method may include the steps of enlarging the existing hole, placing a rivet into the enlarged hole, fusion welding the rivet into place, grinding the rivet to be flush with the vane, and machining a new fuel supply hole in the vane. The new fuel supply hole is smaller than the existing fuel supply hole.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a gas turbine engine showing a compressor, a combustor, a turbine, and a load.
Fig. 2 is a sectional view of a fuel nozzle assembly that may be used with the gas turbine engine of Fig. 1.
Fig. 3 is a sectional view taken along line 3-3 of Fig. 2 showing the vanes of the fuel nozzle assembly.
Fig. 4 is an enlarged view of one of the vanes of the fuel nozzle assembly of Fig. 3.
Fig. 5 is a side view of a fuel nozzle assembly to be repaired according to the method steps described herein.
Fig. 6 is a perspective view of a rivet used to repair the fuel nozzle assembly of Fig. 5
Fig. 7 is a perspective view of a portion of the fuel nozzle assembly of Fig. 5.
Fig. 8 is a further perspective view of a portion of the fuel nozzle assembly of Fig. 5.
Fig. 9 is a further perspective view of a portion of the fuel nozzle assembly of Fig. 5.
Fig. 10 is a further perspective view of a portion of the fuel nozzle assembly of Fig. 5.
Fig. 11 is a further perspective view of a portion of the fuel nozzle assembly of Fig. 5 as repaired herein.
Fig. 12 is a flow chart showing exemplary method steps in the repair of the fuel nozzle assembly of Fig. 5.

### DETAILED DESCRIPTION

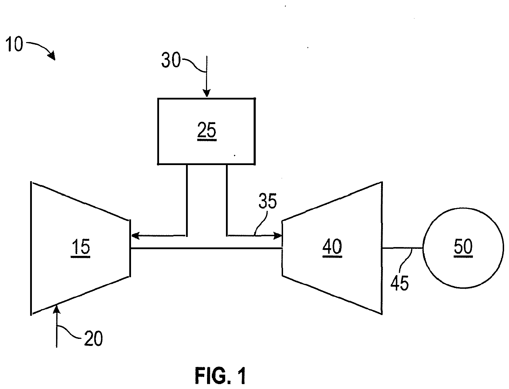

Referring now to the drawings, in which like numerals refer to like elements throughout the several views, Fig. 1 shows a schematic diagram of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of hot combustion gases 35. Although only a single combustor 25 is shown, the gas turbine engine 10 may include any number of combustors 25. The flow of hot combustion gases 35 is in turn delivered to a turbine 40. The flow of hot combustion gases 35 drives the turbine 40 so as to produce mechanical work. The mechanical work produced in the turbine 40 drives the compressor 15 via a shaft 45 and an external load 50 such as an electrical generator and the like.

The gas turbine engine 10 may use natural gas, various types of syngas, liquid fuels, and/or other types of fuels and blends thereof. The gas turbine engine 10 may be any one of a number of different gas turbine engines offered by General Electric Company of Schenectady, New York, including, but not limited to, those such as a 7 or a 9 series heavy duty gas turbine engine and the like. The gas turbine engine 10 may have different configurations and may use other types of components. Other types of gas turbine engines also may be used herein. Multiple gas turbine engines, other types of turbines, and other types of power generation equipment also may be used herein together.

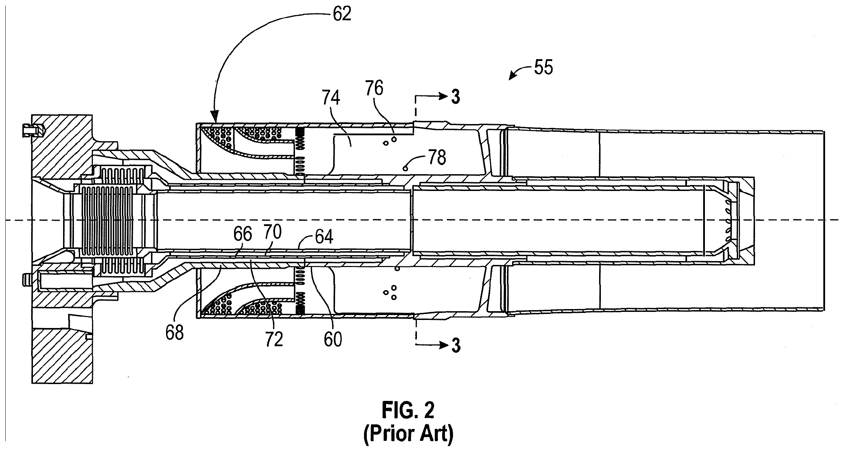

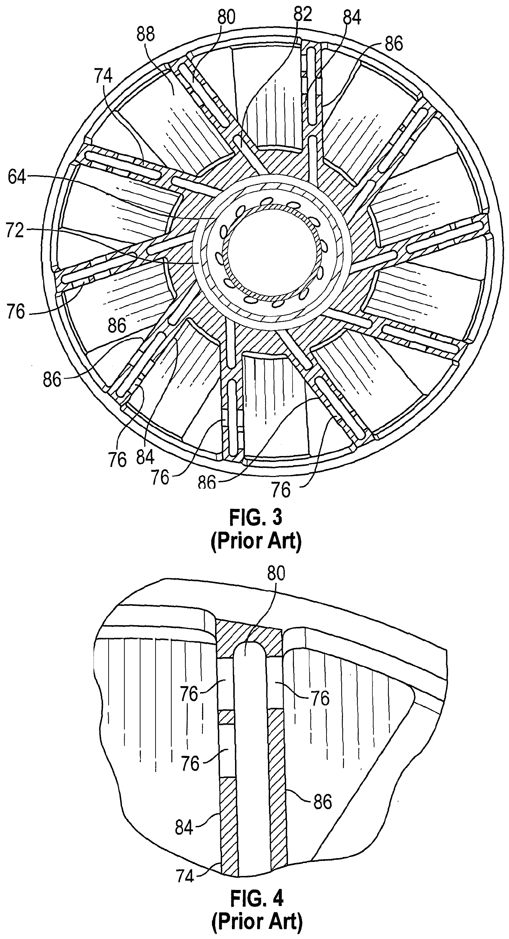

Figs. 2-4 represent an example of a conventional fuel nozzle assembly 55 that may be used with the gas turbine engine 10. Generally, the fuel nozzle assembly 55 may include a subassembly 60 and a surrounding air inlet conditioner 62. The subassembly 60 may include a central tube 64 and a pair of concentric tubes 66 and 68 defining therebetween discrete annular fuel passages 70 and 72. The central tube 64 supplies diffusion gas to a combustion zone (not shown) located downstream of the fuel nozzle assembly 55. The subassembly 60 further includes a number of vanes 74 that are shown in Fig. 2 as circumferentially spaced from each other around the outer tube 68. The vanes 74 may include outer premix fuel supply holes 76 supplied with gaseous fuel from the passage 72 and a number of inner premix fuel supply holes 78 supplied with gaseous fuel from the passage 70. Each vane 74 may have a pair of outer and inner plenums 80 and 82, respectively, confined between opposite side walls 84 and 86 of the vane 74. The holes 76 and 78 may be fluidically connected with the passages 72 and 70 through the outer and inner plenums 80 and 82, respectively.

The outer premix fuel supply holes 76 may include a pair of the radially spaced premix fuel supply holes 76 through one wall 84 of the vane 74 and a single premix fuel supply hole 76 through the opposite side wall 86 of the vane 74. Downstream portions 88 of the vanes 74 may impart a swirl to the flow of premixed air and gaseous fuel flowing between the subassembly 60 and the inlet flow conditioner 62, the gaseous fuel being supplied to the air stream via the outer and inner premix fuel supply holes 76 and 78, respectively.

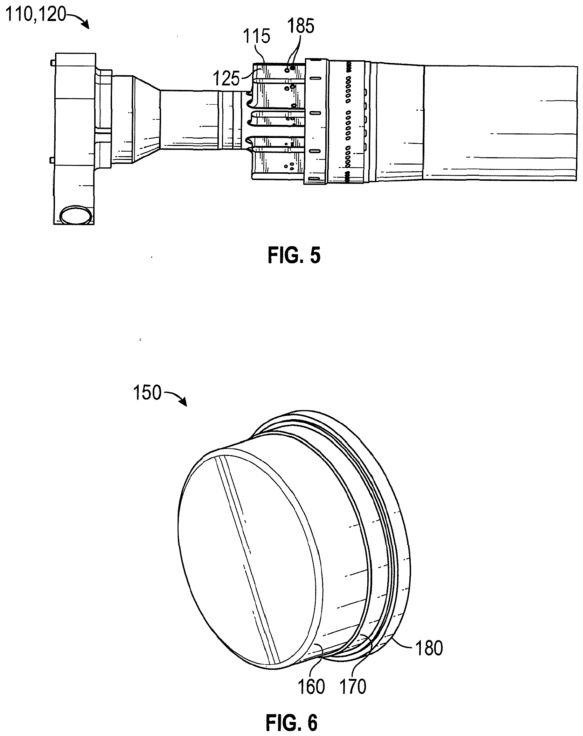

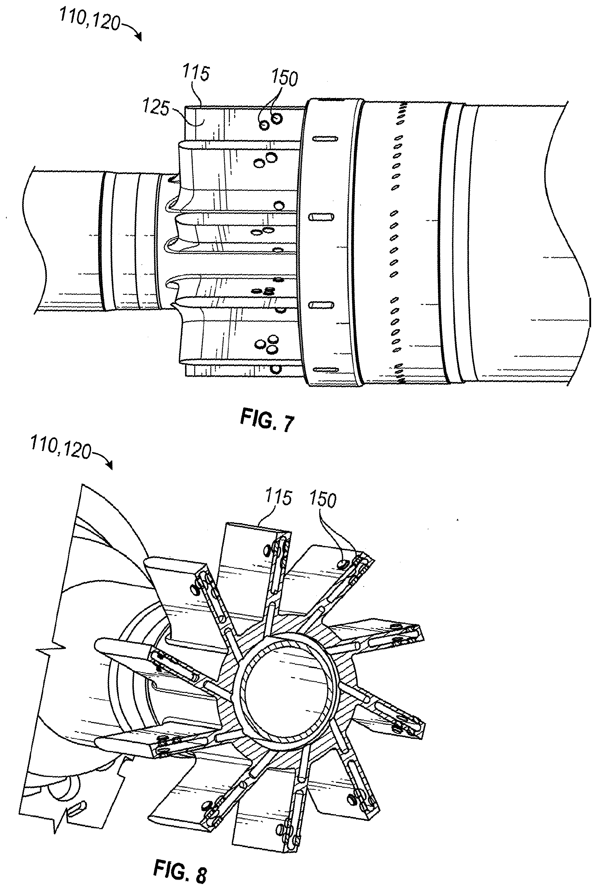

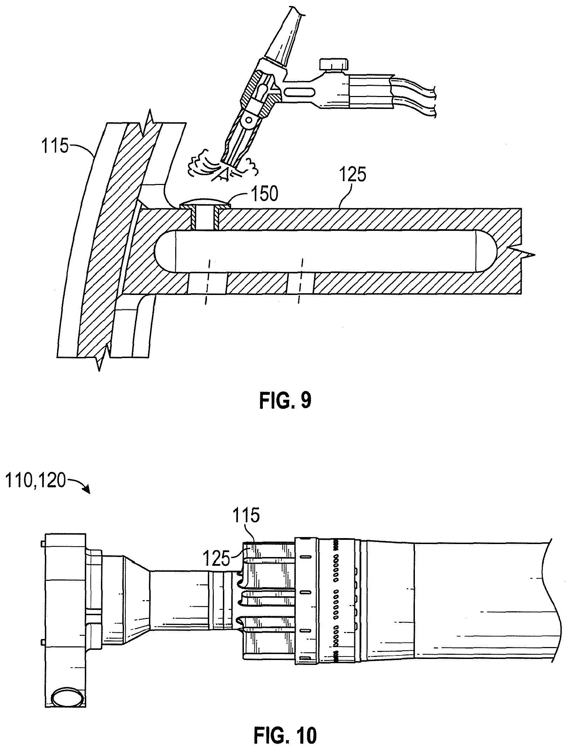

Figs. 5-12 show exemplary systems and method steps in resizing a hole 100 such as the fuel supply holes 76 in a turbine component 110 such as a vane 115 of a fuel nozzle assembly 120. Other types of surfaces 125 also may be used herein. At Fig. 5 and step 130, the existing holes 76 may be enlarged by plunge electrical discharge machining (EDM), a drill or ream process, and similar techniques. At step 140, replacement rivets 150 may be fabricated. As is shown in Fig. 6, the rivets 150 may have a body 160, a flange 170, and an upper cap 180. The size and shape of the rivets 150 may vary. The rivets 150 may be made from the same or similar high temperature material alloys as the components of the fuel nozzle assembly 120. At Figs. 7 and 8 and step 190, the rivets 150 may be pressed into the enlarged holes 185 until the rivets 150 are largely flush with the surface 125 of the vane 115. At Fig. 9 and step 200, the rivets 150 may be fusion welded into place within the enlarged hole 185. Other types of joining techniques may be used herein. At Fig. 10 and step 210, the cap 180 of the rivet 150 may be ground down to be flush with the surface 125 of the vane 115. Other types of finishing techniques may be used herein.

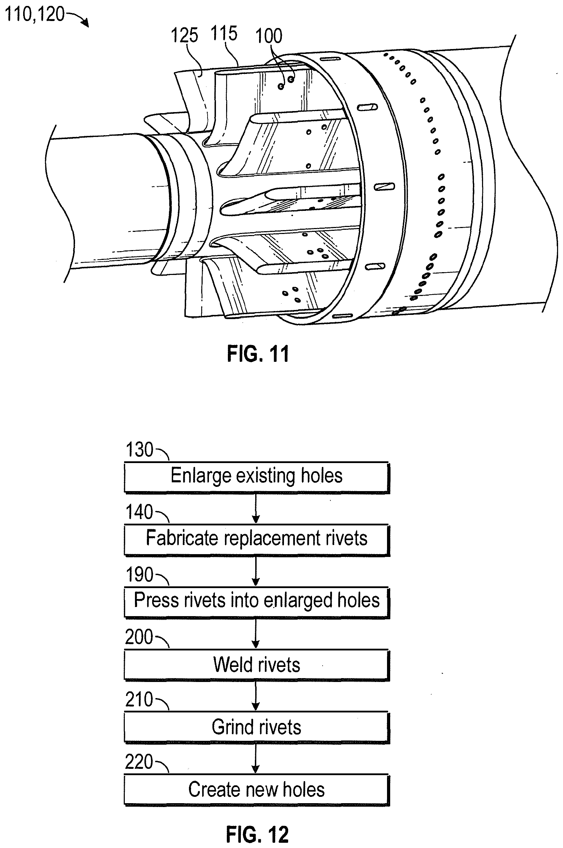

At Fig. 11 and step 220, the new holes 100 may be machined in the vane 115. The size, number, and location of the holes 100 may be varied from the original configuration. Specifically, any number of the holes 110 may be created in any suitable size, shape, or configuration. The holes 100 may be created via a plunge EDM process as above or via similar machining techniques. Other components and other configurations may be used herein.

The resizing steps described herein thus allows an upgraded configuration to the vanes 115 of the fuel nozzle assembly 120 or other type of turbine component 110. Moreover, unwanted fuel nozzle inventory may be retrofitted with vanes 115 having useful hole sizes and configurations and returned to service. The resultant fuel nozzle assembly 120 thus may have comparable or even improved dynamics, flame holding, emissions, and the like. As opposed to the known expensive brazed cylindrical plugs and aluminide closure methods, the use of the custom rivets 150 provides consistent hole to hole flow repeatability.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

## Claims

1. A method of filling an existing hole (76) in a surface (125) of a turbine component (110), comprising:
enlarging the existing hole (76);
placing a rivet (150) into the enlarged hole (185);
welding the rivet (150) into place; and
grinding the rivet (150) to be flush with the surface (125) of the turbine component (110).

2. The method of claim 1, wherein the step of filling an existing hole (76) in a surface (125) of a turbine component (110) comprises filing an existing hole (76) in a vane (115) of a fuel nozzle assembly (120).

3. The method of claim 1, wherein the step of enlarging the existing hole (76) comprises an electronic discharge machining process.

4. The method of claim 1, wherein the step of enlarging the existing hole (76) comprises a drill or a ream process.

5. The method of claim 1, further comprising the step of fabricating the rivet (150).

6. The method of claim 5, wherein the step of fabricating the rivet (150) comprises fabricating the rivet (150) with a body (160), a flange (170), and a cap (180).

7. The method of claim 1, wherein the step of placing the rivet (150) into the enlarged hole (185) comprising placing the rivet (150) into the enlarged hole (185) until the rivet (150) is flush with the surface (125).

8. The method of claim 1, wherein the rivet (150) comprises a body (160) and a cap (180) and wherein the step of welding the rivet (150) into place comprises fusion welding the cap (180) to the surface (125).

9. The method of claim 1, wherein the rivet (150) comprises a body (160) and a cap (180) and wherein the step of grinding the rivet (150) to be flush with the surface (125) of the turbine component (110) comprises grinding the cap (180) of the rivet (150).

10. The method of claim 1, further comprising machining a new hole (100) in the surface (125) of the turbine component (110).

11. The method of claim 10, wherein the step of machining a new hole (100) in the surface (125) of the turbine component (110) comprises an electronic discharge machining process.

12. The method of claim 10, wherein the step of machining a new hole (100) in the surface (125) of the turbine component (110) comprises machining a plurality of new holes (100) in the surface (125) of the turbine component (110).

13. The method of claim 10, wherein the existing hole (76) comprises a first size, wherein comprises new hole (100) has a second size, and wherein the second size is smaller than the first size.

14. The method of claim 10, wherein the existing hole (75) comprises a first position, wherein the new hole (100) comprises a second position, and wherein the second position is different than the first position.

15. A method of replacing an existing fuel supply hole (76) in a vane (115) of a fuel nozzle assembly (120), comprising:
enlarging the existing hole (76);
placing a rivet (150) into the enlarged hole (185);
fusion welding the rivet (150) into place;
grinding the rivet (150) to be flush with the vane (115); and
machining a new fuel supply hole (100) in the vane (115);
wherein the new fuel supply hole (100) is smaller than the existing fuel supply hole (76).
